# FASCICULE DE BREVET EUROPEEN

(11) **EP 2 877 825 B1**
(45) Date de publication et mention de la délivrance du brevet: **06.03.2019**
(21) Numéro de dépôt: 13744489.9
(22) Date de dépôt: 26.07.2013
(51) Int. Cl.: G01K 17/00, G01N 25/48

(54) **CELLULE DE MESURE CALORIMETRIQUE HAUTE PRESSION**
COLORIMETRISCHE HOCHDRUCK-MESSZELLE
HIGH-PRESSURE CALORIMETRIC MEASUREMENT CELL

(30) Priorité: 27.07.2012 FR 1257319
(43) Date de publication de la demande: 03.06.2015
(73) Titulaire: Université de Pau et des Pays de l'Adour, 64012 Pau (FR)
(72) Inventeur: TORRE, Jean-Philippe, Stéphane, F-40700 Sainte Colombe (FR); PLANTIER, Frédéric, Cédric, F-64000 Pau (FR); MARLIN, Laurent, Christian, Noël, F-65690 Barbazan-Debat (FR)
(74) Mandataire: Lavoix
(86) Numéro de dépôt international: PCT/EP2013/065820
(87) Numéro de publication internationale: WO 2014/016414

(56) Documents cités:
- Setaram Instrumentation: "C80 Calvet Calorimeter", , mars 2009 (2009-03), XP002696806, Extrait de l'Internet: URL:http://www.experta-benelux.com/brochur es/C80.pdf [extrait le 2013-05-10]

## Description

La présente invention concerne un ensemble d'une cellule de mesure calorimétrique et d'un dispositif de support de cette cellule de mesure, ainsi qu'un calorimètre comportant un tel ensemble.

On connaît déjà, dans l'état de la technique, des calorimètres dits de type « Calvet ». Un tel calorimètre comporte notamment une enceinte thermostatée (également appelée « bloc calorimétrique »), dans laquelle sont logées une cellule de mesure, destinée à recevoir une substance d'étude, et une cellule de référence, afin de permettre une analyse différentielle du flux de chaleur échangé entre ces deux cellules.

De manière classique, la cellule de mesure est entourée par un premier ensemble de thermocouples, permettant de mesurer un premier flux de chaleur entre la substance d'étude et l'enceinte. De même, la cellule de référence est entourée par un second ensemble de thermocouples pour mesurer un second flux de chaleur entre cette cellule, qui contient ou non un fluide de référence, et l'enceinte.

Un tel calorimètre permet de mesurer expérimentalement certaines propriétés thermodynamiques de la substance introduite dans la cellule de mesure, telles que des enthalpies de changement d'état, des températures de transitions de phase ou des capacités calorifiques.

En particulier, on peut souhaiter effectuer des mesures pour une substance d'étude au cours d'une réaction, notamment une réaction chimique, physique ou physico-chimique.

Par exemple, ladite substance d'étude est un liquide dans lequel on injecte du gaz soluble. Dans ce cas, l'agitation de la cellule de mesure est généralement nécessaire pour permettre une solubilisation rapide du gaz dans le liquide. D'autres réactions chimiques nécessitent de la même manière une agitation, notamment pour homogénéiser la substance.

A cet effet, on connait déjà différentes cellules. La cellule dite « cellule fermée de mélange ou batch mixing cell» permet en cassant une petite ampoule de mélanger deux substances préalablement introduites dans la cellule (l'une dans l'ampoule et l'autre au fond de la cellule).

La cellule simple « dite mixing circulation liquid cell » est faite pour mélanger avec un très faible couple deux liquides qui peuvent entrer et sortir de la cellule, mais n'existe pas avec un fonctionnement sous pression.

Des exemples peuvent être trouvés dans la brochure "C80 Calvet Calorimeter", Staram Instrumentation de mars 2009.

Une autre façon d'agiter les cellules est d'ajouter au calorimètre un dispositif compliqué permettant de basculer ce calorimètre, très fastidieux à mettre en oeuvre.

La présente invention a notamment pour but de remédier à ces inconvénients, en fournissant un dispositif de support d'une cellule de mesure d'un calorimètre, permettant une agitation d'une substance dans la cellule de mesure, et cela même pour des mesures sous pression, le tout en présentant une structure simple à mettre en oeuvre.

A cet effet, l'invention a notamment pour objet un ensemble d'une cellule de mesure calorimétrique et d'un dispositif de support de cette cellule de mesure, caractérisé en ce que le dispositif de support comporte :
- un corps, destiné à être monté dans une enceinte thermostatée d'un calorimètre (ou bloc calorimétrique),
- un embout de support de la cellule de mesure, comprenant des moyens de fixation de la cellule de mesure sur cet embout de support,
- des organes de circulation de fluide dans la cellule de mesure, propres à contrôler la pression dans cette cellule de mesure, et
des moyens d'agitation de la cellule de mesure.

Les moyens d'agitation de la cellule de mesure comportent par exemple une tige d'agitation qui s'étend notamment à l'intérieur de la cellule de mesure. Une telle tige d'agitation permet une agitation suffisante pour effectuer un brassage ou agitation de substances simples ou de mélanges de fluides dans cette cellule de mesure, et cela sans nécessiter de basculer le calorimètre. En outre, le dispositif selon l'invention permet de réaliser une agitation sous pression, grâce aux organes de circulation de fluide. En effet, les organes de circulation de fluide permettent d'introduire du fluide dans la cellule, ou d'extraire du fluide de la cellule, ce qui permet un contrôle dynamique de la pression.

Le fluide est par exemple mis sous pression en amont des organes de circulation de fluide, par des moyens externes, par exemple en liant le dispositif à une bouteille ou un réservoir de gaz sous pression, on en utilisant un compresseur.

Avantageusement, le corps de l'ensemble est creux et présente une paroi latérale circonférentielle délimitant, dans le corps creux, une première chambre et une seconde chambre séparées par un élément d'obturation étanche, les organes de circulation de fluide comportant :
- un organe d'arrivée de fluide, débouchant dans la première chambre à travers la paroi latérale, et un organe d'évacuation de fluide, débouchant dans la seconde chambre à travers la paroi latérale,
- un organe tubulaire extérieur, s'étendant depuis la seconde chambre jusqu'à l'embout de support, de manière à déboucher, d'une part, dans la seconde chambre et, d'autre part, dans la cellule de mesure lorsqu'elle est fixée à l'embout de support, et
- un organe tubulaire intérieur, s'étendant coaxialement à l'intérieur de l'organe tubulaire extérieur, depuis la première chambre, à travers l'élément d'obturation, jusqu'à l'embout de support, de manière à déboucher, d'une part, dans la première chambre et, d'autre part, dans la cellule de mesure lorsqu'elle est fixée à l'embout de support.

Ainsi, le dispositif selon l'invention permet de faire circuler progressivement un premier composant vers un second composant introduit préalablement dans la cellule de mesure, pour effectuer un mélange progressif, contrairement à une « cellule de mélange » de l'état de la technique dans laquelle des composants à mélanger sont introduits ensemble dans la cellule avant la mesure.

Cette structure du dispositif de support selon l'invention permet de maîtriser la pression dans la cellule de mesure, au moyen des organes d'introduction et d'évacuation de fluide, et des organes tubulaires intérieur et extérieur.

En particulier, il est possible d'effectuer une introduction progressive d'un fluide par l'organe d'arrivée de fluide, puis de convoyer ce fluide à travers un conduit délimité par l'organe tubulaire intérieur jusqu'à la cellule de mesure.

De même, il est possible d'évacuer un fluide, en convoyant ce fluide depuis la cellule de mesure, à travers un conduit délimité entre l'organe tubulaire extérieur et l'organe tubulaire intérieur, jusqu'à l'organe d'évacuation de fluide.

Ainsi, les organes d'arrivée et d'évacuation de fluide permettent de faire circuler, à pression ou à débit maîtrisé, un fluide en continu dans la cellule de mesure, notamment pour y injecter un réactif liquide ou gazeux, ou encore pour réaliser une purge de la cellule de mesure.

Ces organes d'arrivée et d'évacuation permettent également de maintenir un niveau de pression donné dans la cellule de mesure, par exemple lorsqu'une réaction, notamment une réaction chimique, physique ou physico-chimique, absorbant ou générant du gaz, a lieu dans la cellule de mesure. Par exemple, on peut prévoir des réactions chimiques consommant du CO₂, ou des réactions au cours desquelles des clathrates ou des hydrates se forment et se dissocient. En effet, dans ce dernier cas, du gaz est absorbé lors de la formation des clathrates ou des hydrates, et du gaz est émis lors de leur dissociation.

Grâce au dispositif selon l'invention, il est possible de réaliser des mesures à température variable et à pression constante

Un dispositif de support selon l'invention peut comporter en outre l'une ou plusieurs des caractéristiques suivantes, prises seules ou selon toutes les combinaisons techniquement possibles.
- Le dispositif de support comporte un tube plongeant, agencé dans le prolongement de l'organe tubulaire intérieur, destiné à s'étendre dans la cellule de mesure lorsqu'elle est fixée à l'embout de support.
- Le dispositif de support comporte une tige d'agitation, s'étendant le long d'un axe de tige depuis le corps jusqu'à l'embout de support, et dans la cellule de mesure lorsqu'elle est fixée à l'embout de support, la tige d'agitation étant mobile en rotation autour de l'axe de tige.
- La tige d'agitation s'étend coaxialement à l'intérieur de l'organe tubulaire intérieur, depuis la première chambre jusqu'à l'embout de support, et dans la cellule de mesure lorsqu'elle est fixée à l'embout de support.
- La tige d'agitation comporte au moins un élément d'agitation, agencé sur la tige d'agitation au-delà de l'embout de support de manière à être disposée à l'intérieur de la cellule de mesure lorsqu'elle est fixée à cet embout de support.
- L'élément d'agitation est formé par au moins une rondelle de forme générale annulaire, présentant un contour intérieur lié en rotation à la tige d'agitation, et un contour extérieur muni d'ailettes.
- Chaque rondelle est solidarisée à la tige d'agitation de façon à présenter un axe de rondelle formant un angle non nul avec l'axe de tige.
- L'ensemble comporte au moins deux rondelles dont les axes de rondelle sont parallèles, et/ou au moins deux rondelles disposées symétriquement par rapport à un plan perpendiculaire à l'axe de tige.
- L'élément d'agitation est formé par une vis sans fin, ou un mobile d'agitation de type hélice, turbine, ou ancre.
- La tige d'agitation comporte une première partie, s'étendant depuis la première chambre jusqu'à l'embout de support, et une seconde partie s'étendant au-delà de l'embout de support de manière à être disposée à l'intérieur de la cellule de mesure lorsqu'elle est fixée à cet embout de support, la seconde partie étant solidaire en rotation avec la première partie, et chaque rondelle étant portée par la seconde partie.
- L'ensemble comporte un moteur comprenant un arbre de sortie, et un organe d'accouplement agencé sur le corps, comprenant un arbre intermédiaire destiné d'une part à être accouplé à l'arbre de sortie, et d'autre part à être accouplé à la tige d'agitation.
- L'ensemble comporte un moteur comprenant un arbre de sortie, et des moyens magnétiques de couplage de l'arbre de sortie avec la tige d'agitation.
- L'embout de support étant destiné à être fixé à une cellule de forme générale cylindrique, les moyens de fixations de la cellule cylindrique sur l'embout de support comportent une partie filetée ménagée sur l'embout de support, complémentaire d'une partie taraudée de la cellule cylindrique.

L'invention concerne également un calorimètre du type comportant une enceinte, caractérisé en ce qu'il comporte :
- un ensemble d'une cellule de mesure et d'un dispositif de support de la cellule de mesure tel que défini précédemment, logé dans l'enceinte,
- un premier ensemble de thermocouples entourant la cellule de mesure,
- une cellule de référence, logée dans l'enceinte, et
- un second ensemble de thermocouples entourant la cellule de référence.

L'invention concerne en outre l'utilisation d'un calorimètre ayant les caractéristiques ci-dessus pour l'étude de la formation et la dissociation d'hydrates de gaz ou de clathrates.

L'invention sera mieux comprise à la lecture de la description qui va suivre, donnée uniquement à titre d'exemple et faite en se référant aux figures annexées, parmi lesquelles :
- la figure 1 est une vue en coupe d'une partie supérieure d'un dispositif de support selon un exemple de mode de réalisation de l'invention ;
- la figure 2 est une vue en coupe d'une partie inférieure du dispositif de support de la figure 1, comprenant notamment un embout de support d'une cellule de mesure ;
- la figure 3 est un thermogramme obtenu durant une phase de refroidissement d'un procédé d'étude d'une substance au moyen d'un calorimètre selon l'invention ;
- la figure 4 est un thermogramme obtenu durant une phase de chauffe du procédé d'étude de ladite substance au moyen du calorimètre selon l'invention ;
- la figure 5 est un graphique d'exploitation du thermogramme de la figure 4 pour l'obtention de températures de dissociation ;
- la figure 6 est un graphique de comparaison entre des données expérimentales obtenues au moyen du calorimètre selon l'invention et des données de la littérature ;
- la figure 7 est une vue partielle de la partie inférieure représentée sur la figure 2, montrant la circulation de fluide dans la cellule de mesure ;
- la figure 8 est une vue similaire à la figure 2 d'une partie inférieure du dispositif de support selon une variante de réalisation ;
- la figure 9 est une vue similaire à la figure 7, montrant la circulation de fluide dans la partie inférieure de la cellule de mesure représentée sur la figure 8 ;
- la figure 10 est un graphique représentant une courbe de correspondance entre un signal calorimétrique obtenu (en abscisse) et une valeur des enthalpies de fusion de corps purs ;
- la figure 11 est un graphique obtenu au cours d'un procédé d'étude thermodynamique d'hydrate de gaz au moyen d'un dispositif selon l'invention ;
- la figure 12 est un graphique similaire à la figure 11, obtenu au cours d'un procédé d'étude thermodynamique d'hydrate de gaz au moyen d'un dispositif connu dans l'état de la technique ;
- la figure 13 est un graphique comparant des résultats expérimentaux obtenus au moyen du dispositif selon l'invention, avec des données de la littérature ; et
- la figure 14 est une vue similaire à la figure 1, d'une partie supérieure d'un dispositif de support selon une variante de réalisation de l'invention.

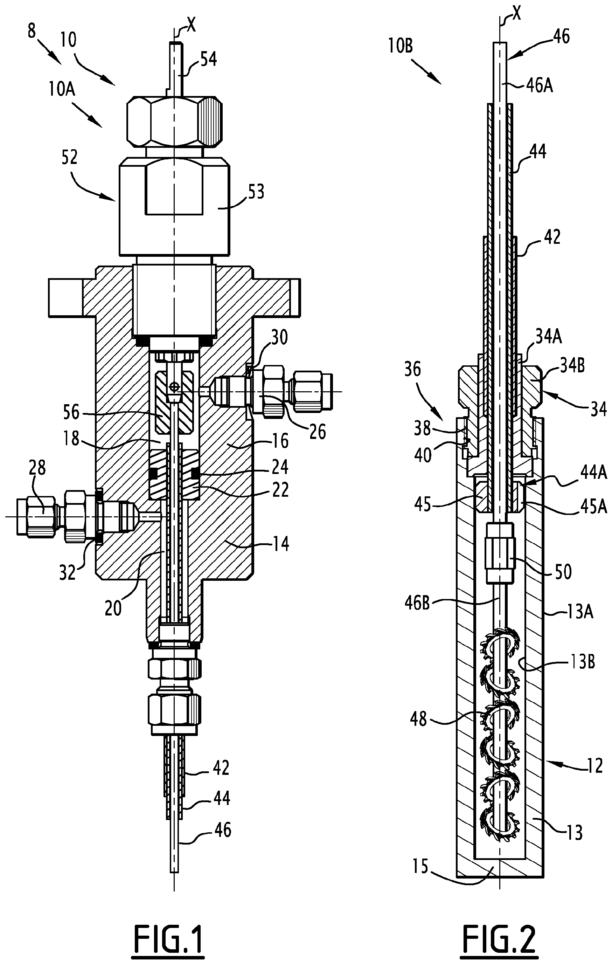

On a représenté sur les figures un ensemble 8 d'une cellule de mesure 12 et d'un dispositif 10 de support de la cellule de mesure 12, destiné à équiper un calorimètre, notamment un calorimètre de type « Calvet ». Une partie supérieure 10A du dispositif de support 10 est représentée sur la figure 1, et une partie inférieure 10B du dispositif de support 10 est représentée sur la figure 2.

On rappelle qu'un calorimètre de type « Calvet », comporte une enceinte thermostatée, dans laquelle est logée la cellule de mesure 12 et une cellule de référence. Un premier ensemble de thermocouples entoure la cellule de mesure 12, pour mesurer un premier flux de chaleur entre l'intérieur et l'extérieur de cette cellule de mesure 12, et un second ensemble de thermocouples entoure la cellule de référence pour mesurer un second flux de chaleur entre l'intérieur et l'extérieur de cette cellule de référence.

La cellule de mesure 12 est destinée à recevoir une substance d'étude dont on souhaite effectuer une analyse thermique, et la cellule de référence est généralement vide ou remplie d'un produit dont les caractéristiques thermiques sont parfaitement connues, afin de permettre une analyse différentielle des flux de chaleur en comparant la cellule de mesure et la cellule de référence.

Habituellement, et comme cela est le cas dans la présente description, la cellule de mesure 12, représentée plus en détail sur la figure 2, présente une forme générale cylindrique creuse, délimitée par une paroi cylindrique 13 présentant une surface extérieure 13A et une surface intérieure 13B, et par une paroi de fond 15 refermant la cellule 12 à une extrémité inférieure. La cellule de mesure 12 est en revanche ouverte à son extrémité supérieure, afin de permettre l'introduction d'une substance à analyser thermiquement dans cette cellule de mesure 12.

On a représenté, sur la figure 1, la partie supérieure 10A du dispositif de support 10. Cette partie supérieure 10A comporte un corps creux 14 destiné à être monté sur l'enceinte thermostatée (non représentée) du calorimètre. En particulier, ce corps creux 14 forme une « tête de puits », destinée à être disposée au sommet d'un puits ménagé dans l'enceinte thermostatée du calorimètre, en refermant ce puits. Par exemple, le puits présente un diamètre de 17 mm et une profondeur de 550 mm.

Conformément au mode de réalisation décrit, le corps creux 14 présente une forme générale de révolution autour d'un axe X, et présente donc une paroi latérale circonférentielle 16 de forme cylindrique.

Le dispositif de support 10 comporte des organes de circulation de fluide dans la cellule de mesure 12, permettant notamment d'augmenter la pression dans cette cellule de mesure 12 au-delà de la pression atmosphérique. Le fluide introduit dans le dispositif peut être mis sous pression par l'intermédiaire de moyens externes, par exemple une bouteille de gaz ou un réservoir sous pression, ou au moyen d'un compresseur.

A cet effet, la paroi latérale circonférentielle 16 délimite, dans le corps creux 14, une première chambre 18 et une seconde chambre 20, séparées entres elles par un élément d'obturation 22 étanche, comportant notamment un joint d'étanchéité 24.

Les organes de circulation de fluide comportent un organe 26 d'arrivée de fluide, débouchant dans la première chambre 18 à travers la paroi latérale 16, et un organe 28 d'évacuation de fluide, débouchant dans la seconde chambre 20 à travers la paroi latérale 16.

Avantageusement, afin d'assurer une bonne étanchéité des première 18 et seconde 20 chambres, des moyens d'étanchéité 30 sont agencés entre l'organe d'arrivée 26 et la paroi latérale 16, et des moyens d'étanchéité 32 sont agencés entre l'organe d'évacuation 28 et la paroi latérale 16. Ces moyens d'étanchéité 30, 32 comportent par exemple chacun un joint d'étanchéité annulaire pincé entre un épaulement circonférentiel de l'organe d'arrivée 26, respectivement de l'organe d'évacuation 28, et un épaulement circonférentiel ménagé sur la paroi latérale 16.

L'organe d'arrivée 26, ainsi que l'organe d'évacuation 28, est susceptible d'être relié à une conduite extérieure respective (non représentée), propre à convoyer un fluide depuis un dispositif d'alimentation jusqu'à cet organe d'arrivée 26, respectivement depuis l'organe d'évacuation 28 jusqu'à un dispositif de réception. Par ailleurs, chacun des organes d'arrivée 26 et d'évacuation 28 comporte une vanne respective, pour autoriser ou interdire le passage d'un fluide à travers cet organe d'arrivée 26 ou d'évacuation 28.

Comme cela est représenté sur la figure 2, le dispositif de support 10 comporte, dans sa partie inférieure 10B, un embout de support 34 pour supporter la cellule de mesure 12.

L'embout de support 34 comporte des moyens 36 de fixation de la cellule de mesure 12 sur cet embout de support 34. En particulier, les moyens de fixation 36 comportent une partie filetée 38 ménagée sur l'embout de support 34, complémentaire d'une partie taraudée 40 de la cellule 12. La partie taraudée 40 est ménagée à l'extrémité supérieure de la cellule 12, sur la surface intérieure 12B.

Par exemple, l'embout de support 34 comporte un élément fixe 34A, de forme générale de révolution autour de l'axe X, et un élément mobile 34B, coaxial avec l'élément fixe 34A, et mobile autour de l'élément fixe 34A et de l'axe X. Dans ce cas, la partie filetée 38 est ménagée sur l'élément mobile 34B. Ainsi, l'élément mobile 34B forme un écrou, susceptible d'être vissé dans la cellule de mesure 12 en tournant autour de l'élément fixe 34A.

Les organes de circulation de fluide comportent par ailleurs un organe tubulaire extérieur 42 et d'un organe tubulaire intérieur 44 coaxiaux, reliant notamment la partie supérieure 10A du dispositif de support 10 à la partie inférieure 10B.

L'organe tubulaire extérieur 42 s'étend depuis la seconde chambre 20 jusqu'à l'embout de support 34, de manière à déboucher, d'une part dans la seconde chambre 20, et d'autre part dans la cellule de mesure 12 lorsque celle-ci est fixée à l'embout de support 34.

Par ailleurs, l'organe tubulaire intérieur 44 s'étend coaxialement à l'intérieur de l'organe tubulaire extérieur 42, depuis la première chambre 18, à travers l'élément d'obturation 22, jusqu'à l'embout de support 34. Ainsi, l'organe tubulaire intérieur 44 débouche d'une part dans la première chambre 18 et d'autre part dans la cellule de mesure 12 lorsque celle-ci est fixée à l'embout de support 34.

Avantageusement, l'organe tubulaire intérieur 44 présente une extrémité distale 44A filetée, sur laquelle un organe de centrage 45 taraudé est vissé. Cet organe de centrage 45 est destiné à coopérer avec une paroi intérieure de la cellule 12 pour permettre un bon centrage des organes tubulaires 42, 44 par rapport à cette cellule 12. On notera que cet organe de centrage 45 présente au moins un passage 45A pour le fluide, afin d'autoriser le passage de fluide depuis la cellule 12 jusqu'à l'organe tubulaire extérieur 42.

Un fluide introduit dans la première chambre 18, à travers l'organe d'arrivée 26, est ensuite convoyé dans un premier conduit délimité par l'organe tubulaire intérieur 44 jusqu'à l'intérieur de la cellule de mesure 12, dans laquelle il peut se mélanger avec un composant, par exemple un liquide, introduit préalablement dans cette cellule de mesure 12.

De même, lorsqu'un fluide doit être évacué depuis la cellule de mesure 12, par exemple pour réguler la pression dans cette cellule de mesure 12, ou lorsqu'une réaction chimique dans la cellule 12 entraine la formation d'un gaz à évacuer, ce fluide est convoyé à travers un second conduit défini entre l'organe tubulaire intérieur 44 et l'organe tubulaire extérieur 42 jusqu'à la chambre 20, afin d'être évacué à travers l'organe d'évacuation 28. Les organes de circulation de fluide permettent donc un contrôle dynamique de la pression dans la cellule 12, en maîtrisant la fourniture et l'évacuation de fluide, par exemple de gaz, dans cette cellule 12.

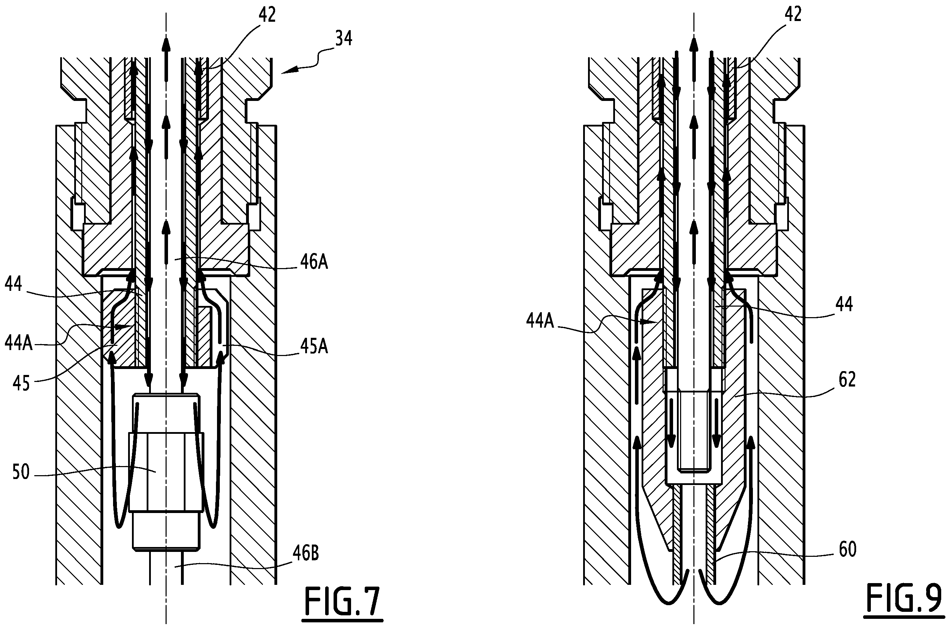

Les organes de circulation de fluide sont en partie représentés sur la figure 7. Le fluide entre par l'organe d'arrivée 26, circule dans ledit premier conduit jusqu'à la cellule de mesure 12, remplit la cellule de mesure 12 (qui peut par ailleurs contenir un autre fluide, notamment un liquide), puis circule dans ledit second conduit, pour ressortir par l'organe d'évacuation 28.

Les organes de circulation de fluide permettent de réaliser une circulation de fluide sous pression. Cette circulation de fluide a notamment pour but de réguler la pression à l'intérieur de la cellule 12. En particulier, lorsque la pression baisse dans la cellule 12, du fluide est admis par l'entrée, et lorsque la pression augmente dans la cellule 12, du fluide est extrait par la sortie.

La circulation de fluide permet également d'effectuer, de manière particulièrement simple, un balayage gazeux de la cellule. A cet effet, du gaz est admis par l'entrée, circule dans la cellule de mesure 12, et ressort par la sortie. Ce fonctionnement, à but de régulation ou de purge, peut être réalisé avec ou sans agitation, et sous pression.

En plus d'une régulation de pression possible, les organes de circulation de fluide permettent une mise sous pression dans la cellule 12. A cet effet, l'organe d'arrivée 26 est connecté à un dispositif externe de mise sous pression, par exemple une bouteille de gaz sous pression ou un compresseur.

On notera que l'ensemble 8 est conformé pour fonctionner sous pression. L'ensemble 8 est notamment étanche lorsque les accès aux organes d'arrivée 26 et d'évacuation 28 sont fermés (par exemple au moyens de vannes connectées à ces organes d'arrivées et d'évacuation), si bien que l'ensemble 8 est propre à tenir en pression lorsque la cellule 12 contient du gaz sous pression.

Comme indiqué précédemment, on peut effectuer une régulation de cette pression, en la maintenant à une valeur prédéfinie dans la cellule, et on peut effecteur des balayages gazeux tout en fonctionnant sous pression.

Dans certains cas, il est nécessaire d'agiter l'échantillon contenu dans la cellule 12, par exemple pour permettre une solubilisation rapide d'un gaz dans un liquide et pour éviter un gradient de concentration en gaz dissous qui se formerait entre la surface du liquide et le fond de la cellule 12. Une agitation permet également, pour des mesures réalisées avec des milieux polyphasiques tels que des émulsions ou des suspensions, de maintenir l'homogénéité du milieu analysé. L'agitation peut également être nécessaire pour la conduite de réaction chimique sous pression dans la cellule de mesure 12, afin d'homogénéiser les milieux réactionnels. Enfin, pour une réaction de cristallisation de composé qui se forme sous pression par combinaison de liquide et de gaz (comme des clathrates et des hydrates de gaz), l'agitation permet de renouveler en permanence la surface de contact entre le liquide et le gaz (brassage du solide), afin d'éviter la formation, à l'interface gaz/liquide, d'une croûte solide imperméable au gaz qui bloquerait la conversion du liquide, et afin ainsi de maintenir la solubilisation du gaz dans le liquide résiduel.

Afin d'effectuer une telle agitation de manière simple et efficace, le dispositif de support 10 comporte une tige d'agitation 46, s'étendant le long d'un axe de tige, ici confondu avec l'axe X, et s'étendant coaxialement à l'intérieur de l'organe tubulaire intérieur 44, depuis la première chambre 18 jusqu'à l'embout de support 34, et dans la cellule de mesure 12 lorsque celle-ci est fixée à l'embout de support 34. Cette tige d'agitation 46 est mobile en rotation autour de l'axe X.

La tige d'agitation comporte au moins un élément d'agitation 48 agencé sur la tige d'agitation 46 au-delà de l'embout de support 34, de manière à être disposé à l'intérieur de la cellule de mesure 12 lorsque celle-ci est fixée à cet embout de support 34.

Dans l'exemple représenté, la tige d'agitation 46 comporte au moins une rondelle 48 de forme générale annulaire, présentant un contour intérieur lié en rotation à la tige d'agitation 46, et un contour extérieur muni d'ailettes permettant un brassage de la substance contenue dans la cellule 12 lorsque la tige d'agitation 46 est entraînée en rotation. Une telle rondelle 48 est généralement appelée « rondelle éventail ». Dans l'exemple représenté, la tige d'agitation 46 porte six rondelles 48.

Chaque rondelle 48 est solidarisée à la tige d'agitation 46 de façon à présenter un axe de rondelle formant un angle non nul avec l'axe de tige X. En d'autres termes, ces rondelles 48 sont soudées en quinconce sur la tige d'agitation 46.

Dans l'exemple représenté, les rondelles 48 sont réparties en deux groupes de rondelles, tels que, dans chaque groupe, les axes des rondelles 48 de ce groupe sont parallèles entre eux. Par ailleurs, chaque rondelle de chaque groupe est disposée symétriquement à une rondelle de l'autre groupe par rapport à un plan perpendiculaire à l'axe de tige X. Cette disposition des rondelles 48 permet une agitation optimisée de la substance dans la cellule de mesure 12.

En variante, la tige d'agitation 46 pourrait porter tout autre type d'élément d'agitation, par exemple une vis sans fin ou des mobiles d'agitation de type hélice, turbine, ancre ou autre.

Avantageusement, pour un montage aisé de la tige d'agitation 46, celle-ci comporte une première partie 46A, s'étendant depuis la première chambre 18 jusqu'à l'embout de support 34, et une seconde partie 46B s'étendant au-delà de l'embout de support 34 de manière à être disposée à l'intérieur de la cellule de mesure 12 lorsqu'elle est fixée à cet embout de support 34. La seconde partie 46B est solidaire en rotation avec la première partie 46A, au moyen d'un élément d'accouplement 50 de type classique. Dans ce cas, les rondelles 48 sont portées sur la seconde partie 46B. Ainsi, la seconde partie 46B est démontable, pour n'être utilisée que lorsqu'une agitation est nécessaire.

Afin d'entraîner la tige d'agitation 46 en rotation autour de son axe X, le dispositif de support 10 comporte un moteur (non représenté) comprenant un arbre de sortie lié en rotation avec la tige d'agitation 46. A cet effet, le dispositif de support 10 comporte un organe d'accouplement 52 agencé sur le corps creux 14, de manière à refermer la première chambre 18 de manière étanche. Cet organe d'accouplement 52 comporte notamment un corps 53, de forme complémentaire d'un logement ménagé dans le corps 14, ainsi qu'un arbre intermédiaire 54, destiné à être accouplé avec l'arbre de sortie du moteur, et s'étendant à travers le corps 53 de l'organe d'accouplement 52 jusqu'à l'intérieur de la chambre 18. L'arbre intermédiaire est accouplé avec la tige d'agitation 46 dans la première chambre 18, au moyen d'un élément d'accouplement 56 de type classique.

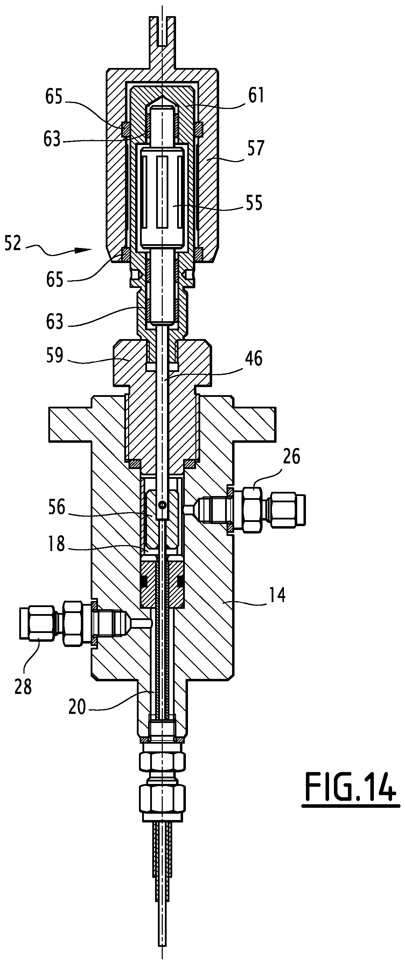

En variante, la tige d'agitation 46 pourrait être couplée à l'arbre du moteur par des moyens magnétiques plutôt que les moyens mécaniques décrits ci-dessus, comme cela est représenté sur la figure 14. Dans ce cas, la tige d'agitation 46 est par exemple munie d'un premier élément magnétique 55, notamment un électro-aimant, et l'arbre du moteur est muni d'un second élément magnétique, notamment un aimant permanent 57. De tels moyens de couplage magnétique ont pour avantage de ne pas nécessiter le passage d'un organe d'accouplement à travers les parois du corps creux 14, et ne nécessitent donc pas de moyens d'étanchéité supplémentaires.

Plus particulièrement, dans cette variante, l'organe d'accouplement 52 comporte un embout de liaison 59, de forme complémentaire d'un logement ménagé dans le corps 14, et relié à ce corps 14 de manière étanche. L'organe d'accouplement 52 comporte également un boîtier 61, fixé de manière étanche sur l'embout de liaison 59. Ce boîtier 61 comporte un espace intérieur dans lequel est logé le premier élément magnétique 55. Avantageusement, des premiers moyens 63 de guidage en rotation, par exemple des roulements à billes ou à rouleaux ou des paliers, sont agencés entre le premier élément magnétique 55 et le boîtier 61.

Par ailleurs, le second élément magnétique 57 est agencé autour du boîtier 61. Avantageusement, des seconds moyens 65 de guidage en rotation, par exemple des roulements à billes ou à rouleaux ou des paliers, sont agencés entre le second élément magnétique 57 et le boîtier 61.

Lorsque le second élément magnétique 57 est entrainé en rotation par l'arbre de sortie du moteur, il entraîne le premier élément magnétique 55 en rotation par effet de champs magnétiques. Ce premier élément magnétique 55 étant relié à la tige d'agitation 46, celle-ci est également entrainée en rotation autour de son axe.

Cette variante permet principalement de sécuriser la cellule 12 en évitant tout risque de fuite de gaz au niveau du système d'entraînement de la tige d'agitation 46, une telle fuite pouvant présenter des risques de sécurité, notamment lorsque le gaz est inflammable. En effet, dans le cas du couplage mécanique décrit précédemment, il peut exister un risque de fuite de gaz entre l'organe d'accouplement 52 et le corps 14, notamment lorsque l'organe d'accouplement 52 est muni d'un joint d'étanchéité s'usant au cours du temps.

Ainsi, lorsque la tige d'agitation 46 est entraînée par couplage magnétique, il n'est plus nécessaire d'agencer un organe d'étanchéité entre la partie tournante formée par la tige d'agitation 46 et la partie fixe. Dans ce cas, il est possible de mettre la cellule 12 à des pressions de fonctionnement plus élevées que dans le cas d'un couplage mécanique, tout en augmentant le niveau de sécurité.

On notera que tout autre moyen magnétique d'entrainement en rotation de la tige d'agitation 46 peut être envisagé.

Il apparaît clairement que le dispositif de support 10 selon l'invention permet de travailler à la fois sous pression, en condition agitée, avec un volume important d'échantillon et en assurant un contrôle dynamique de pression, le tout étant adapté aux contraintes géométriques liées à l'utilisation d'un calorimètre de type « Calvet ». En particulier, on notera que le dispositif de support 10 n'induit pas de contrainte sur l'encombrement de la cellule de mesure 12, si bien qu'il est possible d'utiliser une cellule de mesure présentant un volume relativement important.

Un dispositif selon l'invention, par exemple tel que décrit ci-dessus, peut par exemple être utilisé pour déterminer des conditions d'équilibre de phase d'un système nécessitant à la fois (i) une tenue en pression, (ii) une agitation, et (iii) un contrôle dynamique de pression de la cellule.

Ainsi, à titre d'exemple, on décrira ci-dessous l'utilisation d'un dispositif selon l'invention pour l'étude de la formation et la dissociation d'hydrates de CO₂ et d'hydrates mixtes contenant à la fois du CO₂ et du Tetrahydrofurane (CO₂+THF). Cette famille de composés (hydrates et clathrates) est notamment décrite plus en détail dans la publication Sloan, E.D, 2003. « Fundamental principles and applications of natural gas hydrates » Nature 426, 20, 353-359.

L'objectif est de déterminer les températures de dissociation de ces deux hydrates à une pression constante (donnant un point P-T sur la courbe d'équilibre). Pour cette expérience, une très faible concentration de tensioactif anionique, le sodium dodecyl sulfate (SDS) a été ajouté à la solution. Le SDS (dans les conditions de concentrations utilisées ici) est un additif cinétique ne modifiant pas les conditions d'équilibre (voir notamment la publication Torré, J.-P., Dicharry, C., Ricaurte, M., Broseta, D., Diaz, J., Renaud, X., 2011b. « CO2 enclathration in a semi-continuous quiescent hydrate-forming reactor operated with pure CO2 and water soluble additives », Proceedings of the 7th International Conférence on Gas Hydrates (ICGH 2011), Edinburgh, 2011).

Pour cela, il est nécessaire de :
- solubiliser le CO₂ dans la solution (contenue dans la cellule) sous pression et sous agitation ;
- former les deux types d'hydrates en refroidissant le système jusqu'à une température donnée, sous agitation et en maintenant la pression à une valeur constante (alimentation de gaz nécessaire);
- dissocier les deux hydrates formés en augmentant la température selon une rampe de chauffe donnée, sous agitation, tout en maintenant la pression constante (relarguage de gaz).

Par la suite, la réponse calorimétrique obtenue lors de la phase de chauffe a été analysée pour obtenir les deux températures de dissociation des hydrates formés. Enfin, les résultats expérimentaux obtenus sont comparés à d'autres résultats publiés dans la littérature.

Plus particulièrement, les conditions de l'expérience sont définies ci-dessous.

Le gaz utilisé est du CO₂.

La substance d'étude est une solution aqueuse contenant 4% en masse de THF et 0.3% en masse de SDS. La masse de substance d'étude introduite est 6.88 g.

La pression dans la cellule est portée à 30,2 ± 0,3 bars.

Enfin, la vitesse de rotation de l'agitateur est de 150 Tours par minute.

L'enceinte thermostatée est activée pour la réalisation d'une phase de refroidissement, depuis une température initiale de 20 °C jusqu'à une température finale de 1 °C, avec une rampe de chauffe à vitesse non contrôlée proche de 0.1 °C/min. La cellule de mesure est ensuite maintenue à 1 °C durant plusieurs heures, généralement pendant une nuit.

L'enceinte thermostatée est ensuite activée pour la réalisation d'une phase de chauffe, depuis une température initiale de 1 °C jusqu'à une température finale de 25 °C, avec une rampe de chauffe à vitesse contrôlée égale à 0.1 °C/min.

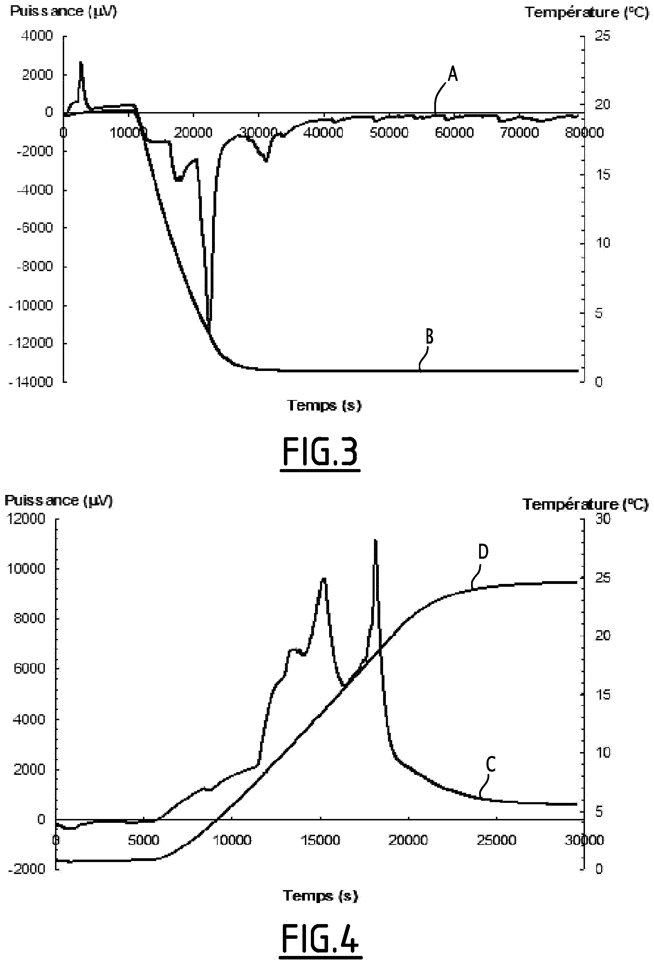

Les résultats obtenus ont été représentés sur les figures 3 à 6.

En particulier, le thermogramme obtenu durant la phase de refroidissement, à une pression P = 30,2 bars, est représenté sur la figure 3. Sur cette figure 3, l'évolution de la puissance est représentée par la courbe A, et l'évolution de la température par la courbe B.

Il apparaît que le signal mesuré n'est pas bruité par l'agitation. Par ailleurs, plusieurs pics sont obtenus durant le refroidissement, mais il est difficile d'en tirer des conclusions du fait de la métastabilité des systèmes étudiés.

Le thermogramme obtenu durant la phase de chauffe, à une pression P = 30,2 bars, est représenté sur la figure 4. Sur cette figure 4, l'évolution de la puissance est représentée par la courbe C, et l'évolution de la température par la courbe D.

Il apparaît que le signal mesuré n'est pas bruité par l'agitation. Par ailleurs, plusieurs pics sont obtenus durant la phase de chauffe, ces pics correspondant aux diverses transitions de phase.

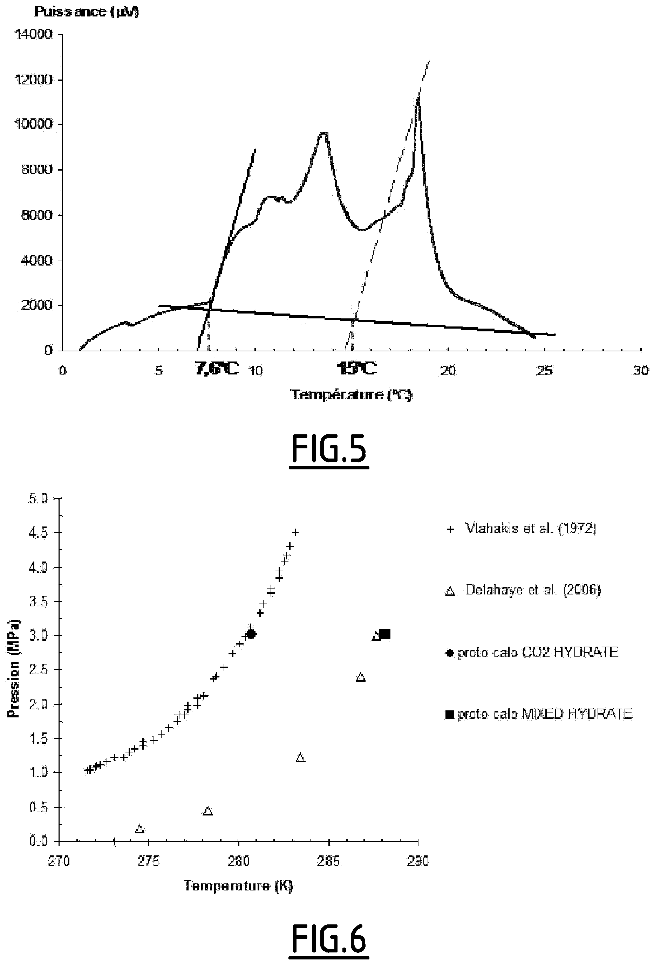

La méthode d'exploitation des thermogrammes, connue en soi, est présentée en figure 5. L'intersection de la tangente au point d'inflexion (donné par la courbe dérivée) du premier pic avec la ligne de base est dénommée « le point d'onset », et donne la température de dissociation de l'hydrate de CO₂ à la pression de l'expérience (30,2 bars).

Le dernier pic est attribué à la dissociation de l'hydrate mixte (THF+CO₂) obtenu pour 4 % en masse de THF. La température de dissociation de cet hydrate s'obtient alors par une projection sur la ligne de base selon une direction parallèle au front de montée linéaire du premier pic.

Conformément à cette figure 5, les résultats obtenus sont les suivants. Pour une pression de 30,2 bars (3,02 MPa), la température de dissociation de l'hydrate de CO₂ est de 7,6 °C (280,7 K), et la température de dissociation de l'hydrate mixte THF+CO₂ (4% en masse de THF) est de 15 °C (288,1 K).

Ces résultats peuvent être comparés avec des données accessibles dans la littérature, comme cela est représenté sur la figure 6, en particulier avec les données de Vlahakis et al. (1972) pour la courbe d'équilibre de l'hydrate de CO₂ pur, et les données de Delahaye et al. (2006) pour la courbe d'équilibre de l'hydrate mixte CO2+THF (4 % en masse de THF).

Il est observé un très bon accord entre les données expérimentales obtenues avec le dispositif selon l'invention et les données déjà publiées dans la littérature, démontrant les performances de l'invention présentée.

D'autres résultats obtenus avec le dispositif selon l'invention seront décrits ci-dessous.

Il est à noter que, pour pouvoir mesurer précisément des températures de transitions de phase et des phénomènes énergétiques, il est nécessaire de réaliser une calibration en température et en enthalpie de la cellule 12. Une telle calibration peut être réalisée de manière classique, sans difficulté particulière.

A titre d'exemple, on a reporté dans le Tableau 1 ci-dessous des températures de fusion de corps purs, obtenues expérimentalement avec le dispositif selon l'invention, et comparées avec celles trouvées dans la littérature (NIST).

Dans ce tableau, T_{fusion}_ref correspond aux températures de référence trouvées dans la littérature, et T_{fusion}_exp correspond aux températures obtenues expérimentalement.

**Tableau 1**

| *Fluides de référence (NIST)* | T_{fusion}_ref (°C) | T_{fusion}_exp (°C) |
|---|---|---|
| eau | 0,00 ± 0,05 | 0,1 ± 0,1 |
| cyclohexane | 6,5 ± 0,3 | 6,7 ± 0,2 |
| n-C₁₂ | -9,7 ± 0,3 | -9,9 ± 0,2 |
| n-C₁₄ | 5,6 ± 0,9 | 5,3 ± 0,2 |
| n-C₁₆ | 18 ± 1 | 18,1 ± 0,2 |

Il apparaît que les résultats expérimentaux sont en accords avec les valeurs de la littérature, avec une précision estimée à ± 0.2°C.

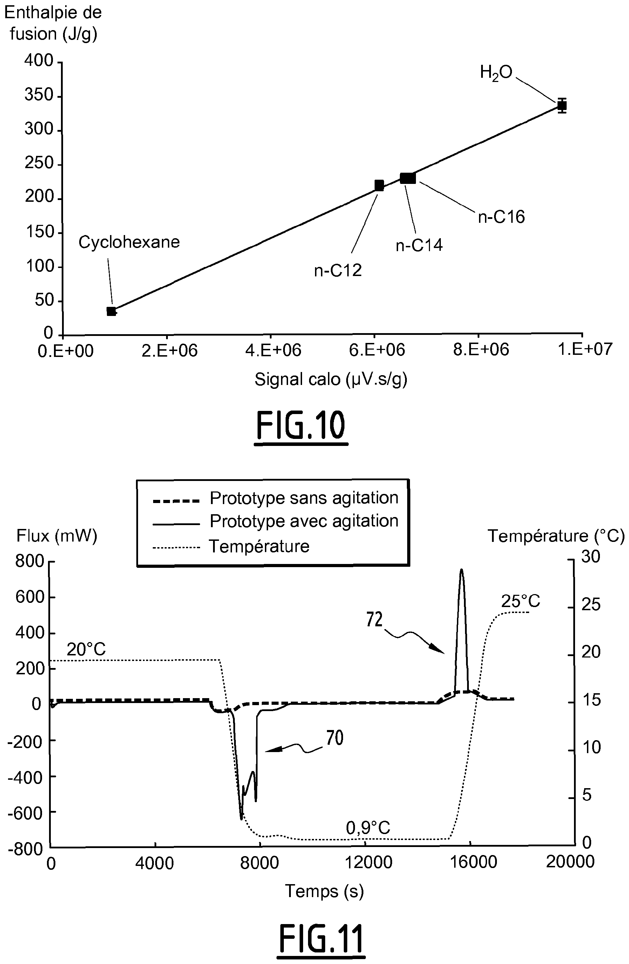

Par ailleurs, on a représenté, sur la Figure 10, une courbe de correspondance entre le signal calorimétrique obtenu (en abscisse) et la valeur des enthalpies de fusion des corps purs listés dans le Tableau 1 (en ordonnée). Cette courbe de correspondance permet de déterminer la constante de calibration en enthalpie du prototype, qui est nécessaire pour remonter à des données thermodynamiques et thermophysiques.

Il apparaît que la courbe de calibration est une droite passant par zéro, étendue sur une large gamme de niveaux d'énergie (de 30 à 300 J/g). Il est donc simple de calibrer le dispositif selon l'invention par cette méthode.

L'effet bénéfique de l'agitation sera étudié ci-dessous.

Cet effet bénéfique est notamment illustré par la figure 11, dans un cas pratique d'étude thermodynamique d'hydrate de gaz, et plus particulièrement d'hydrates de CO₂.

Une masse d'eau connue (par exemple environ 5 grammes) est préalablement introduite dans la cellule de mesure 12. Cette cellule de mesure 12 est fermée et installée au fond du puits calorimétrique.

L'air contenu dans le dispositif de support 10 est ensuite évacué par balayage de CO₂, en utilisant les organes de circulation de fluide.

Le dispositif 10 est ensuite mis sous pression de CO₂, par exemple à 30,5 bars, à l'aide d'une bouteille de CO₂ et d'un détendeur. L'agitation est ensuite activée, par exemple à une vitesse de 150 RPM (rotations par minute).

Le dispositif 10 est alors laissé pendant plusieurs heures à 20°C (température régulée) et sous pression constante pour effectuer la solubilisation du CO₂ dans l'eau.

On notera, comme indiqué précédemment, que l'agitation dans la cellule 12 ne provoque pas de bruit de mesure supplémentaire par rapport au cas « sans agitation » (dans lequel exactement le même protocole est suivi, mais sans activer l'agitateur).

La température de la cellule 12 est ensuite diminuée jusqu'à 0,9°C pour tenter de former l'hydrate de CO₂. La pression est maintenue constante dans le dispositif lors du refroidissement par les organes de circulation de fluide, permettant le contrôle dynamique de pression.

Dans le cas où la cellule 12 est agitée, on constate clairement sur la Figure 11 un pic exothermique 70 lors du refroidissement, correspondant à la cristallisation de l'hydrate de CO₂ dans la cellule de mesure.

En revanche, il apparaît que la cristallisation n'intervient pas lorsque la cellule 12 n'est pas agitée, et cela même en laissant le système à l'équilibre (statique) à 0,9°C pendant plusieurs heures.

Dans une dernière étape, la température est augmentée jusqu'à 25°C avec une rampe de vitesse de chauffe précise (par exemple 0,1 °C/min dans le cas présent). Lorsque la cellule 12 contient des hydrates (cas avec agitation), on note un pic endothermique 72 pendant la chauffe, correspondant à la dissociation de l'hydrate (le CO₂ est libéré du solide).

En revanche, on ne note aucun événement particulier dans le cas non agité, puisqu'aucun hydrate n'a été formé.

La pression est maintenue constante pendant la phase de chauffe avec les organes de circulation de fluide, permettant le contrôle dynamique de pression. L'analyse du pic 72 obtenu à la remontée de température permet de déterminer la température de dissociation de l'hydrate (dite « onset temperature ») et de calculer l'enthalpie associée à ce phénomène (correspondant à l'aire sous le pic).

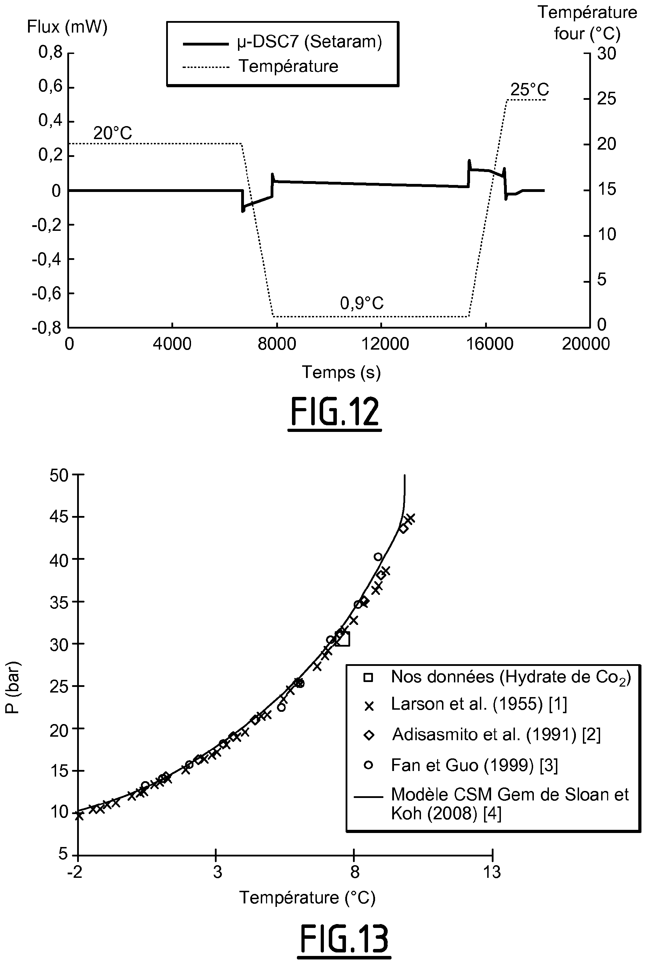

La figure 12 représente les résultats obtenus pour une expérience similaire (exactement les mêmes rampe et paliers de température) mais réalisée sur un dispositif classique, par exemple le micro-DSC7 de chez SETARAM, considéré comme standard en matière de microcalorimètres sous pression pour l'étude des hydrates de gaz. Il apparaît clairement sur cette Figure 12 que dans ces conditions, aucune cristallisation n'est obtenue, la cellule n'étant pas agitée et présentant un volume plus faible. En particulier, on ne remarque aucun pic exothermique ni pic endothermique sur cette Figure 12.

Ainsi, il apparaît clairement que le dispositif selon l'invention, permettant l'agitation de la cellule 12 sous conditions de pression, permet de réaliser la cristallisation, ce qui illustre bien l'effet bénéfique de l'agitation pour réaliser cette cristallisation dans ces conditions.

On notera que ces résultats sont reproductibles. Par exemple, le Tableau 2 ci-dessous montre des résultats obtenus en termes de température de dissociation (T_{disso}) et d'enthalpie de dissociation (ΔH_{disso}) pour trois essais réalisés dans les mêmes conditions que celles décrites précédemment pour obtenir les résultats de la Figure 11. l apparaît une très bonne reproductibilité dans les résultats obtenus.

**Tableau 2**

| | T_{disso} (°C) | ΔH_{disso} (J/gₑₐᵤ) |
|---|---|---|
| Test 1 | 7,5 ± 0,2 | 480 ± 10 |
| Test 2 | 7,6 ± 0,2 | 480 ± 10 |
| Test 3 | 7,7 ± 0,2 | 460 ± 10 |

La figure 13 illustre la comparaison entre les résultats expérimentaux obtenus pour la température de dissociation de l'hydrate de CO₂ à 30,5 bars de CO₂ (moyenne des résultats listés dans le Tableau 2) avec des résultats de la littérature, notamment des publications suivantes :
- [1] Larson, D., 1955. PhD Thesis, University of Illinois, Urbana, Illinois, USA.
- [2] Adisasmito S. et al. (1991). J. Chem. Eng. Data 36(1), 68-71
- [3] Fan S. and Guo T.-M. (1999). J. Am. Chem. Soc. 44, 829-832
- [4] Sloan, E.D and Koh, C.A., 2008. Clathrate hydrates of natural gases. 3rd edition. CRC Press, New York.

Il apparaît clairement que les résultats expérimentaux obtenus sont en parfait accord avec les données de la littérature.

On notera que l'invention n'est pas limitée au mode de réalisation précédemment décrit, mais pourrait présenter diverses variantes sans sortir du cadre des revendications.

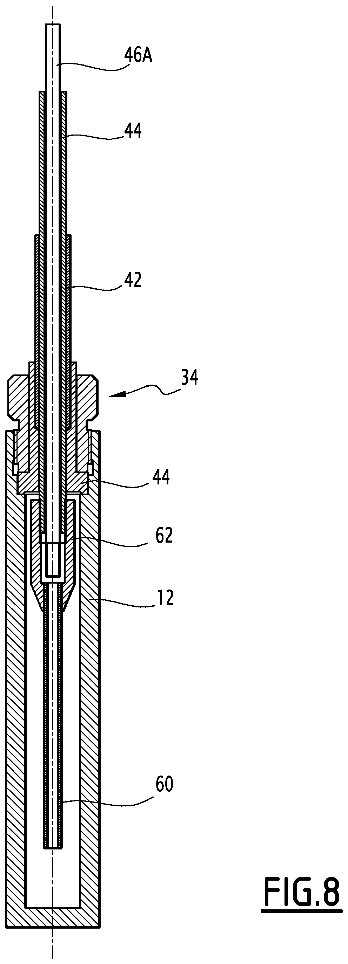

En particulier, le dispositif de support 10 pourrait ne pas comporter de tige d'agitation. Ainsi, conformément à une variante, représentée sur les figures 8 et 9, le dispositif de support 10 comporte un tube plongeant 60 au lieu d'une tige d'agitation 46.

Cette variante est particulièrement avantageuse dans les cas où il est nécessaire de faire buller un gaz sous pression dans un liquide.

On notera que cette variante peut être réalisée au moyen du même dispositif de support 10 que celui décrit précédemment, dans lequel on remplace la seconde partie 46B de la tige d'agitation par ledit tube plongeant 60.

A cet effet, l'élément d'accouplement 50 est dévissé. Un élément de raccord 62, muni du tube plongeant 60, au moins en partie taraudé, est alors vissé sur l'extrémité filetée de l'organe tubulaire intérieur 44. Le tube plongeant 60 est ainsi agencé dans le prolongement de l'organe tubulaire intérieur 44, si bien que le fluide circulant dans le premier conduit passe par ce tube plongeant 60 pour accéder à la cellule 12. Ce tube plongeant 60 s'étend suffisamment dans la cellule 12 pour se retrouver plongé dans un liquide préalablement introduit dans la cellule de mesure 12, permettant ainsi le bullage dans ce liquide.

Plus particulièrement, les organes de circulation de fluide fonctionnent alors de la manière suivante, comme partiellement représenté sur la figure 9. Le fluide, notamment du gaz, est introduit par l'organe d'arrivée 26, chemine dans le premier conduit défini par l'organe tubulaire interne 44, puis à travers le tube plongeant 60, jusqu'à un niveau proche du fond de la cellule de mesure 12, le niveau de liquide se trouvant initialement au-dessus de l'extrémité du tube plongeant. Le gaz bulle alors dans le liquide contenu dans la cellule 12, puis ressort du dispositif en cheminant par le second conduit défini par l'organe tubulaire externe 42, pour sortir par l'organe d'évacuation 28.

## Revendications

1. Ensemble (8) d'une cellule de mesure calorimétrique (12) et d'un dispositif (10) de support de cette cellule de mesure (12), ledit dispositif de support (10) comportant :
- un corps (14), destiné à être monté sur une enceinte d'un calorimètre,
- un embout (34) de support de la cellule de mesure (12), comprenant des moyens (36) de fixation de la cellule de mesure (12) sur cet embout de support (34), et
- des moyens d'agitation de la cellule de mesure,
**caractérisé en ce que** ledit dispositif de support comporte des organes de circulation de fluide dans la cellule de mesure (12), propres à contrôler la pression dans cette cellule de mesure (12).

2. Ensemble (8) selon la revendication 1, dans lequel le corps (14) est creux et présente une paroi latérale circonférentielle (16) délimitant, dans le corps creux (14), une première chambre (18) et une seconde chambre (20) séparées par un élément d'obturation étanche (22), les organes de circulation de fluide comportant :
- un organe d'arrivée de fluide (26), débouchant dans la première chambre (18) à travers la paroi latérale (16), et un organe d'évacuation de fluide (28), débouchant dans la seconde chambre (20) à travers la paroi latérale (16),
- un organe tubulaire extérieur (42), s'étendant depuis la seconde chambre (20) jusqu'à l'embout de support (34), de manière à déboucher, d'une part, dans la seconde chambre (20) et, d'autre part, dans la cellule de mesure (12) lorsqu'elle est fixée à l'embout de support (34), et
- un organe tubulaire intérieur (44), s'étendant coaxialement à l'intérieur de l'organe tubulaire extérieur (42), depuis la première chambre (18), à travers l'élément d'obturation (22), jusqu'à l'embout de support (34), de manière à déboucher, d'une part, dans la première chambre (18) et, d'autre part, dans la cellule de mesure (12) lorsqu'elle est fixée à l'embout de support (34).

3. Ensemble (8) selon la revendication 2, dans lequel les moyens d'agitation comportent un tube plongeant (60), agencé dans le prolongement de l'organe tubulaire intérieur (44), destiné à s'étendre dans la cellule de mesure (12) lorsqu'elle est fixée à l'embout de support (34).

4. Ensemble (8) selon la revendication 1 ou 2, dans lequel les moyens d'agitation comportent une tige d'agitation (46), s'étendant le long d'un axe de tige (X) depuis le corps (14) jusqu'à l'embout de support (34), et dans la cellule de mesure (12) lorsqu'elle est fixée à l'embout de support (34), la tige d'agitation (46) étant mobile en rotation autour de l'axe de tige (X).

5. Ensemble (8) selon les revendications 2 et 4 prises en combinaison, dans lequel la tige d'agitation (46) s'étend coaxialement à l'intérieur de l'organe tubulaire intérieur (44), depuis la première chambre (18) jusqu'à l'embout de support (34), et dans la cellule de mesure (12) lorsqu'elle est fixée à l'embout de support (34).

6. Ensemble (8) selon la revendication 4 ou 5, dans lequel la tige d'agitation (46) comporte au moins un élément d'agitation (48), agencé sur la tige d'agitation au-delà de l'embout de support (34) de manière à être disposée à l'intérieur de la cellule de mesure (12) lorsqu'elle est fixée à cet embout de support (34).

7. Ensemble (8) selon la revendication 6, dans lequel l'élément d'agitation est formé par au moins une rondelle (48) de forme générale annulaire, présentant un contour intérieur lié en rotation à la tige d'agitation (46), et un contour extérieur muni d'ailettes.

8. Ensemble (8) selon la revendication 7, dans lequel chaque rondelle (48) est solidarisée à la tige d'agitation (46) de façon à présenter un axe de rondelle formant un angle non nul avec l'axe de tige (X).

9. Ensemble (8) selon la revendication 7 ou 8, comportant au moins deux rondelles (48) dont les axes de rondelle sont parallèles, et/ou au moins deux rondelles (48) disposées symétriquement par rapport à un plan perpendiculaire à l'axe de tige (X).

10. Ensemble (8) selon la revendication 6, dans lequel l'élément d'agitation est formé par une vis sans fin, ou un mobile d'agitation de type hélice, turbine, ou ancre.

11. Ensemble (8) selon l'une quelconque des revendications 6 à 10, dans lequel la tige d'agitation (46) comporte une première partie (46A), s'étendant depuis la première chambre (18) jusqu'à l'embout de support (34), et une seconde partie (46B) s'étendant au-delà de l'embout de support (34) de manière à être disposée à l'intérieur de la cellule de mesure (12) lorsqu'elle est fixée à cet embout de support (34), la seconde partie (46B) étant solidaire en rotation avec la première partie (46A), et chaque rondelle (48) étant portée par la seconde partie (46B).

12. Ensemble (8) selon l'une quelconque des revendications 4 à 11, comportant un moteur comprenant un arbre de sortie, et un organe d'accouplement (52) agencé sur le corps (14), comprenant un arbre intermédiaire (54) destiné d'une part à être accouplé à l'arbre de sortie, et d'autre part à être accouplé à la tige d'agitation (46).

13. Ensemble (8) selon l'une quelconque des revendications 4 à 11, comportant un moteur comprenant un arbre de sortie, et des moyens magnétiques de couplage de l'arbre de sortie avec la tige d'agitation (46).

14. Ensemble (8) selon l'une quelconque des revendications précédentes, dans lequel, l'embout de support (34) étant destiné à être fixé à une cellule (12) de forme générale cylindrique, les moyens de fixations (36) de la cellule cylindrique (12) sur l'embout de support (34) comportent une partie filetée (38) ménagée sur l'embout de support (34), complémentaire d'une partie taraudée (40) de la cellule cylindrique (12).

15. Calorimètre, du type comportant une enceinte, **caractérisé en ce qu'**il comporte :
- un ensemble (8) d'une cellule de mesure (12) et d'un dispositif (10) de support de la cellule de mesure (12) selon l'une quelconque des revendications précédentes, logé dans l'enceinte,
- un premier ensemble de thermocouples entourant la cellule de mesure,
- une cellule de référence, logée dans l'enceinte, et
- un second ensemble de thermocouples entourant la cellule de référence.

16. Utilisation d'un calorimètre selon la revendication 15, pour l'étude de la formation et la dissociation d'hydrates de gaz ou de clathrates.

## Patentansprüche

1. Baugruppe (8) einer Zelle zur kalorimetrischen Messung (12) und einer Vorrichtung (10) zum Halten dieser Messzelle (12), wobei die Halte-Vorrichtung (10) aufweist:
- einen Körper (10), der vorgesehen ist, um an einem Gehäuse eines Kalorimeters montiert zu sein,
- ein Ansatzstück (34) zum Halten der Messzelle (12), aufweisend Mittel (36) zum Befestigen der Messzelle (12) an diesem Halte-Ansatzstück (34),
- Rührmittel der Messzelle, und
**dadurch gekennzeichnet, dass** die Halte-Vorrichtung aufweist:
- Einrichtungen zum Zirkulieren von Fluid in der Messzelle (12), die in der Lage sind, den Druck in dieser Messzelle (12) zu regeln.

2. Baugruppe (8) gemäß Anspruch 1, wobei der Körper (14) hohl ist und eine laterale Umfangswand (16) aufweist, die in dem hohlen Körper (14) eine erste Kammer (18) und eine zweite Kammer (20) begrenzt, die durch ein dichtes Absperrmittel (22) getrennt sind, wobei die Einrichtungen zum Zirkulieren von Fluid aufweisen:
- eine Fluidzuleitungseinrichtung (26), die durch die laterale Wand (16) in die erste Kammer (18) einmündet, und eine Fluidableitungseinrichtung (28), die durch die laterale Wand (16) in die zweite Kammer (20) einmündet,
- eine rohrförmige äußere Einrichtung (42), die sich von der zweiten Kammer (20) aus bis zum Halte-Ansatzstück (34) erstreckt, um einerseits in die zweite Kammer (20) und andererseits in die Messzelle (12) einzumünden, wenn diese am Halte-Ansatzstück (34) befestigt ist, und
- eine rohrförmige innere Einrichtung (44), die sich koaxial zu dem Inneren der rohrförmigen äußeren Einrichtung (42) von der ersten Kammer (18) aus über das Absperrelement (22) bis zum Halte-Ansatzstück (34) erstreckt, um einerseits in die erste Kammer (18) und andererseits in die Messzelle (12) einzumünden, wenn diese am Halte-Ansatzstück (34) befestigt ist.

3. Baugruppe (8) gemäß Anspruch 2, wobei die Rührmittel ein Tauchrohr (60) aufweisen, das in der Verlängerung der rohrförmigen inneren Einrichtung (44) angeordnet ist, das vorgesehen ist, um sich in der Messzelle (12) zu erstrecken, wenn diese am Halte-Ansatzstück (34) befestigt ist.

4. Baugruppe (8) gemäß Anspruch 1 oder 2, wobei die Rührmittel eine Rührstange (46) aufweisen, die sich entlang einer Stangenachse (X) von dem Körper (14) aus bis zum Halte-Ansatzstück (34) und in der Messzelle (12) erstreckt, wenn diese am Halte-Ansatzstück (34) befestigt ist, wobei die Rührstange (46) um die Stangenachse (X) drehbewegbar ist.

5. Baugruppe (8) gemäß den Ansprüchen 2 und 4 in Kombination, wobei sich die Rührstange (46) koaxial zu dem Inneren der rohrförmigen inneren Einrichtung (44) von der ersten Kammer (18) aus bis zum Halte-Ansatzstück (34) und in der Messzelle (12) erstreckt, wenn diese am Halte-Ansatzstück (34) befestigt ist.

6. Baugruppe (8) gemäß Anspruch 4 oder 5, wobei die Rührstange (46) mindestens ein Rührelement (48) aufweist, das an der Rührstange über das Halte-Ansatzstück (34) hinaus angeordnet ist, um im Inneren der Messzelle (12) angeordnet zu sein, wenn diese an diesem Halte-Ansatzstück (34) befestigt ist.

7. Baugruppe (8) gemäß Anspruch 6, wobei das Rührelement durch mindestens Unterlegscheibe (48) mit einer im Wesentlichen ringförmigen Form ausgebildet ist, die einen Innenumriss, der mit der Rührstange (46) drehverbunden ist, und einen Außenumriss, der mit Flügeln ausgestattet ist, aufweist.

8. Baugruppe (8) gemäß Anspruch 7, wobei jede Unterlegscheibe (48) fest mit der Rührstange (46) verbunden ist, um eine Unterlegscheibenachse aufzuweisen, die einen Winkel mit der Stangenachse (X) ausbildet, der nicht Null ist.

9. Baugruppe (8) gemäß Anspruch 7 oder 8, aufweisend mindestens zwei Unterlegscheiben (48), deren Unterlegscheibenachsen parallel sind, und/oder mindestens zwei Unterlegscheiben (48), die relativ zu einer Ebene senkrecht zu der Stangenachse (X) symmetrisch angeordnet sind.

10. Baugruppe (8) gemäß Anspruch 6, wobei das Rührelement durch eine Endlosschnecke oder eine Rührvorrichtung des Propeller-, Turbinen- oder Ankertyps ausgebildet ist.

11. Baugruppe (8) gemäß irgendeinem der Ansprüche 6 bis 10, wobei die Rührstange (46) aufweist einen ersten Teil (46A), der sich von der ersten Kammer (18) aus bis zum Halte-Ansatzstück (34) erstreckt, und einen zweiten Teil (46B), der sich über das Halte-Ansatzstück (34) hinaus erstreckt, um im Inneren der Messzelle (12) angeordnet zu sein, wenn diese an diesem Halte-Ansatzstück (34) befestigt ist, wobei der zweite Teil (46B) drehfest mit dem ersten Teil (46A) ist und jede Unterlegscheibe (48) von dem zweiten Teil (46B) getragen wird.

12. Baugruppe (8) gemäß irgendeinem der Ansprüche 4 bis 11, aufweisend einen Motor, der eine Ausgangswelle aufweist, und ein Kupplungsmittel (52), das an dem Körper (14) angeordnet ist, aufweisend eine Zwischenwelle (54), die vorgesehen ist, um einerseits mit der Ausgangswelle gekuppelt zu werden, und andererseits mit der Rührstange (46) gekuppelt zu werden.

13. Baugruppe (8) gemäß irgendeinem der Ansprüche 4 bis 11, aufweisend einen Motor, der eine Ausgangswelle aufweist, und Magnetmittel zum Kuppeln der Ausgangswelle mit der Rührstange (46).

14. Baugruppe (8) gemäß irgendeinem der vorhergehenden Ansprüche, wobei, während das Halte-Ansatzstück (34) vorgesehen ist, um an einer Zelle (12) mit einer im Wesentlichen zylinderförmigen Form befestigt zu sein, die Mittel zum Befestigen (36) der zylinderförmigen Zelle (12) an dem Halte-Ansatzstück (34) einen Schraubenabschnitt (38) aufweisen, der am Halte-Ansatzstück (34) eingerichtet ist, der zu einem Gewindeabschnitt (40) der zylinderförmigen Zelle (12) komplementär ist.

15. Kalorimeter des Typs, der ein Gehäuse aufweist,
**dadurch gekennzeichnet, dass** es aufweist:
- eine Baugruppe (8) einer Messzelle (12) und einer Vorrichtung (10) zum Halten der Messzelle (12) gemäß irgendeinem der vorhergehenden Ansprüche, die in dem Gehäuse angeordnet ist,
- eine erste Baugruppe von Thermoelementen, die die Messzelle umgeben,
- eine Referenzzelle, die in dem Gehäuse aufgenommen ist, und
- eine zweite Baugruppe von Thermoelementen, die die Referenzzelle umgeben.

16. Verwendung eines Kalorimeters gemäß Anspruch 15 zum Untersuchen der Bildung und der Dissoziation von Gashydraten oder Clathraten.

## Claims

1. An assembly (8) of a calorimetric measurement cell (12) and a support device (10) for a measurement cell (12), said the support device (10) comprising:
- a body (14), designed to be mounted on an enclosure of a calorimeter,
- an end-fitting (34) for supporting the measurement cell (12), comprising means (36) for fastening the measurement cell (12) on that supporting end-fitting (34),
- means for agitating the measurement cell,
**characterized in that** said support device (10) comprises:
- fluid flow members in the measurement cell (12), able to control the pressure **in that** measurement cell (12).

2. The assembly (8) according to claim 1, wherein the body (14) is hollow and has a circumferential side wall (16) delimiting, in the hollow body (14), a first chamber (18) and a second chamber (20) that are separated by a tight sealing element (22), the fluid flow members comprising:
- a fluid intake member (26), emerging in the first chamber (18) through the side wall (16), and a fluid discharge member (28), emerging in the second chamber (20) through the side wall (16),
- an outer tubular member (42), extending from the second chamber (20) to the supporting end-fitting (34), so as to emerge in the second chamber (20) on the one hand, and in the measurement cell (12) when it is fastened to the supporting end-fitting (34) on the other hand, and
- an inner tubular member (44), extending coaxially to the inside of the outer tubular member (42), from the first chamber (18), through the sealing element (22), as far as the supporting end-fitting (34), so as to emerge in the first chamber (18) on the one hand, and in the measurement cell (12) when it is fastened to the supporting end-fitting (34) on the other hand.

3. The assembly (8) according to claim 2, wherein the agitating means comprise a dip tube (60), arranged in the extension of the inner tubular member (44), designed to extend in the measurement cell (12) when it is fastened to the supporting end-fitting (34).

4. The assembly (8) according to claim 1 or 2, wherein the agitating means comprise a stirrer (46), extending along a rod axis (X) from the body (14) to the supporting end-fitting (34), and in the measurement cell (12) when it is fastened to the supporting end-fitting (34), the stirrer (46) being rotatable around that rod axis (X).

5. The assembly (8) according to claims 2 and 4 taken together, wherein the stirrer (46) extends coaxially to the inside of the inner tubular member (44), from the first chamber (18) to the supporting end-fitting (34), and in the measurement cell (12) when it is fastened to the supporting end-fitting (34).

6. The assembly (8) according to claim 4 or 5, wherein the stirrer (46) comprises at least one agitation element (48) arranged on the stirrer 46 beyond the supporting end-fitting (34), so as to be positioned inside the measurement cell (12) when the latter is fastened to the supporting end-fitting (34).

7. The assembly (8) according to claim 6, wherein the agitation element (48) is formed by at least one generally annular washer (48), having an inner contour rotatably connected to the stirrer (46), and an outer contour provided with fins.

8. The assembly (8) according to claim 7, wherein each washer (48) is secured to the stirrer (46) so as to have a washer axis forming a non-zero angle with the rod axis (X).

9. The assembly (8) according to claim 7 or 8, comprising at least two washers (48), the washer axes of which are parallel, and/or at least two washers (48) positioned symmetrically relative to a plane perpendicular to the rod axis (X).

10. The assembly (8) according to claim 6, wherein the agitation element is formed by a worm screw, or a mobile stirring device of the propeller, turbine or anchor type.

11. The assembly (8) according to any one of claims 6 to 10, wherein the stirrer (46) comprises a first part (46A), extending from the first chamber (18) to the supporting end-fitting (34), and a second part (46B) extending beyond the supporting end-fitting (34) so as to be positioned inside the measurement cell (12) when it is fastened to that supporting end-fitting (34), the second part (46B) being secured in rotation with the first part (46A), and each washer (48) being supported by the second part (46B).

12. The assembly (8) according to any one of claims 4 to 11, comprising a motor comprising an output shaft, and a coupling member (52) arranged on the body (14), comprising an intermediate shaft (54) designed to be coupled to the output shaft on the one hand, and coupled to the stirrer on the other hand (46).

13. The assembly (8) according to any one of claims 4 to 11, comprising a motor comprising an output shaft, and magnetic means for coupling the output shaft to the stirrer (46).

14. The assembly (8) according to any one of the preceding claims, wherein, the supporting end-fitting (34) being designed to be fastened to a generally cylindrical cell (12), the means (36) for fastening the cylindrical cell (12) on the supporting end-fitting (34) comprise a threaded part (38) arranged on the supporting end-fitting (34), complementary with a tapped part (40) of the cylindrical cell (12).

15. A calorimeter, of the type comprising an enclosure, **characterized in that** it comprises:
- an assembly (8) of a measurement cell (12) and a supporting device (10) for the measurement cell (12) according to any one of the preceding claims, housed in the enclosure,
- a first pair of thermocouples surrounding the measurement cell,
- a reference cell, housed in the enclosure, and
- a second set of thermocouples surrounding the reference cell.

16. A use of a calorimeter according to claim 15, to study the formation and separation of gas hydrates or clathrates.
